# EUROPÄISCHE PATENTANMELDUNG

(11) **EP 4 438 383 A1**
(43) Veröffentlichungstag der Anmeldung: **02.10.2024**
(21) Anmeldenummer: 24166707.0
(22) Anmeldetag: 27.03.2024
(51) Int. Cl.: B60L 9/00, B60L 5/19

(54) **VERFAHREN UND VORRICHTUNG ZUR ANWESENHEITSERKENNUNG VON ELEKTRIZITÄTSVERSORGUNGSEINRICHTUNGEN UND FAHRZEUG**

(30) Priorität: 30.03.2023 DE 102023202954
(71) Anmelder: Siemens Mobility GmbH, 81739 München (DE)
(72) Erfinder: Sasek, Jiri, 32300 Pilsen (CZ); Bäumer, Martin, 59069 Hamm (DE); Halík, Tomá, 160 00 Praha 6 (CZ); Baumgarte, Heinz-Peter, 91083 Baiersdorf (DE)
(74) Vertreter: Siemens Patent Attorneys

(57) **Zusammenfassung**

Die Erfindung bezieht sich auf ein Verfahren zur Anwesenheitserkennung von infrastrukturseitigen Elektrizitätsversorgungseinrichtungen, wobei die Elektrizitätsversorgungseinrichtungen zur Versorgung von Fahrzeugen, insbesondere von Schienenfahrzeugen, über Stromabnehmer der Fahrzeuge geeignet sind.

Es wird vorgeschlagen, dass mittels einer Detektionseinheit (4) eine Zustandsgröße eines Magnetfelds (6) oder eines elektrischen Felds, welches aufgrund einer elektrischen Spannung einer Elektrizitätsversorgungseinrichtung (1), welche zur Stromversorgung eines Fahrzeugs (2) eingerichtet ist, zwischen der Elektrizitätsversorgungseinrichtung (1) und dem Fahrzeug (2) wirkt, gemessen wird, und mittels einer Auswerteeinheit (7) eine Anwesenheit der Elektrizitätsversorgungseinrichtung (1) dann als erkannt beurteilt wird, wenn ein Messwert der gemessenen Zustandsgröße oder eine Mehrzahl an Messwerten der gemessenen Zustandsgröße ein definiertes Kriterium erfüllt oder erfüllen.

Dadurch wird eine unzulässige oder unbeabsichtigte Auslenkung von Stromabnehmern vermieden.

## Beschreibung

Die Erfindung betrifft ein Verfahren zur Anwesenheitserkennung von infrastrukturseitigen Elektrizitätsversorgungseinrichtungen, wobei die Elektrizitätsversorgungseinrichtungen zur Versorgung von Fahrzeugen, insbesondere von Schienenfahrzeugen, über Stromabnehmer der Fahrzeuge geeignet sind.

Insbesondere bei Schienenfahrzeugen in Hybridausführung, deren Antriebe über eine Oberleitung oder/und eine bordeigene Speichereinrichtung (z.B. Akkumulatoren oder Brennstoffzellen etc.) mit Energie versorgt werden können und/oder welche beispielsweise mehrere Antriebe unterschiedlichen Typs (z.B. einen Elektromotor und einen Dieselmotor etc.) aufweisen, besteht häufig Bedarf an einer Sicherung von Stromabnehmern derartiger Schienenfahrzeuge. Mit der Sicherung soll beispielsweise verhindert werden, dass die Stromabnehmer ausgelenkt oder angehoben etc. werden (z.B. aufgrund einer Fehlbedienung durch einen Triebfahrzeugführer etc.), wenn die Fahrzeuge auf Strecken ohne Oberleitung verkehren. Sind die Stromabnehmer z.B. auf Strecken ausgelenkt oder angehoben etc., welche nicht für einen Einsatz der Stromabnehmer ausgelegt sind, so können dadurch schwere Schäden an den Stromabnehmern oder an einer Bahninfrastruktur etc. verursacht werden (beispielsweise durch Kollisionen der Stromabnehmer mit Brücken, Tunneldecken, Bäumen, Portalen, Kränen oder Decken von Depots etc.).

Bei Fahrzeugen mit Ladeeinrichtungen wie z.B. elektrischen Bussen oder elektrischen Lastkraftwagen etc. kann es beispielsweise erforderlich sein, Ladestromabnehmer dahingehend zu sichern, dass diese nur zur Bildung eines elektrischen Kontakts zwischen den Ladestromabnehmern und Kontakthauben von Ladestationen oder zu Wartungszwecken etc. ausgelenkt werden können.

Aus dem Stand der Technik ist beispielsweise die WO 2021/122375 A1 bekannt, welche ein Dach eines Schienenfahrzeugs mit einem darauf angeordneten Stromabnehmer offenbart. Der Stromabnehmer weist ein Stromabnehmergestänge mit einem Oberarm, einem Unterarm sowie weiteren Komponenten auf. An einer Oberseite des Stromabnehmergestänges ist eine Wippe mit Schleifleisten mit dem Stromabnehmergestänge verbunden. Über die Schleifleisten kontaktiert der Stromabnehmer eine Oberleitung. Der Unterarm ist drehbar mit einer Lagervorrichtung gekoppelt, die Lagervorrichtung ist über Stützisolatoren mit dem Dach verbunden.

Weiterhin beschreibt die EP 0 042 334 A1 einen Pantographen für ein Schienenfahrzeug, welcher bei Einwirkung einer außergewöhnlichen Kraft abgesenkt wird. Der Pantograph weist eine Belastungsbegrenzungsvorrichtung auf, welche in Abhängigkeit einer Belastung einer Wippe des Stromabnehmers Bewegungen des Stromabnehmers verhindert. Der Stromabnehmer weist Mittel zum Ausschalten einer Hubfeder des Stromabnehmers auf, welche einen mit einem Unterarm des Stromabnehmers um eine Querachse des Stromabnehmers drehbar verbundenen Haken, der mit der Hubfeder in Eingriff sein kann, umfassen können.

Die WO 2023/001690 A1 offenbart eine Stromversorgungseinrichtung für ein Fahrzeug, welche einen Kontaktkopf aufweist, der über Kontaktrollen mit einer stationären Andockvorrichtung in Kontakt gebracht werden kann.

Ferner ist in der DE 10 2021 208 308 A1 ein Stromabnehmer für ein elektrisches Fahrzeug mit einer Schleifstück-Überwachungseinrichtung beschrieben, mittels welcher elektrische Widerstandsmessungen durchgeführt werden können.

Der Erfindung liegt die Aufgabe zugrunde, ein Verfahren anzugeben, mittels welchem ein Stromabnehmer mit hoher Zuverlässigkeit gegen ein unzulässiges oder unbeabsichtigtes Auslenken abgesichert werden kann.

Erfindungsgemäß wird diese Aufgabe gelöst mit einem Verfahren nach Anspruch 1, bei dem mittels einer Detektionseinheit eine Zustandsgröße eines Magnetfelds oder eines elektrischen Felds, welches aufgrund einer elektrischen Spannung einer Elektrizitätsversorgungseinrichtung, welche zur Stromversorgung eines Fahrzeugs eingerichtet ist, zwischen der Elektrizitätsversorgungseinrichtung und dem Fahrzeug wirkt, gemessen wird, und mittels einer Auswerteeinheit eine Anwesenheit der Elektrizitätsversorgungseinrichtung dann als erkannt beurteilt wird, wenn ein Messwert der gemessenen Zustandsgröße oder eine Mehrzahl an Messwerten der gemessenen Zustandsgröße ein definiertes Kriterium erfüllt oder erfüllen.

Dadurch wird eine hohe Sicherheit bei einem Betrieb des Fahrzeugs erreicht. Risiken im Hinblick auf eine Beschädigung des Fahrzeugs, der Stromabnehmer oder einer Infrastruktur durch unzulässiges oder unbeabsichtigtes Auslenken der Stromabnehmer werden reduziert. Die Stromabnehmer können beispielsweise bei Erfüllung des definierten Kriteriums zur Auslenkung freigegeben werden, da davon ausgegangen werden kann, dass die Elektrizitätsversorgungseinrichtung in einem Umfeld des Fahrzeugs anwesend ist und sich die Stromabnehmer bei deren Auslenkung an die Elektrizitätsversorgungseinrichtung anlegen. Das Fahrzeug kann z.B. ein Schienenfahrzeug mit einem Dachpantographen und die Elektrizitätsversorgungseinrichtung kann beispielsweise als Oberleitung ausgebildet sein, wobei der Dachpantograph an die Oberleitung angelegt oder davon abgelegt werden kann. Denkbar ist jedoch auch, dass das erfindungsgemäße Verfahren z.B. für ein Schnellbahn- oder Untergrundbahnfahrzeug angewendet wird, bei welchem ein Seitenstromabnehmer an eine Stromschiene angelegt oder von dieser abgelegt werden kann etc.

Wird das definierte Kriterium verletzt, können die Stromabnehmer beispielsweise durch ein spezifisches Steuerungs- oder Regelungssignal auf Basis von Auswerteergebnissen der Auswerteeinheit an einen Stromabnehmerantrieb in einer nicht an die Elektrizitätsversorgungseinrichtung angelegten oder eingezogenen Lage gehalten werden.

Die Detektionseinheit und die Auswerteeinheit können in einem Gerät zusammengefasst sein oder aber auch als voneinander verschiedene Geräte ausgebildet sein, die miteinander verbunden sind. Beispielsweise ist es möglich, dass die Detektionseinheit auf einem Dach des Fahrzeugs und die Auswerteeinheit in einem Innenraum des Fahrzeugs angeordnet ist.

Die Anwesenheitserkennung kann kontaktlos erfolgen. Ein Triebfahrzeugführer wird durch das Verfahren im Hinblick auf Kontrolltätigkeiten entlastet. Es ist auch möglich, dass das Verfahren z.B. für automatisiert oder autonom betriebene Fahrzeuge, bei welchen eine Anwesenheitserkennung von Elektrizitätsversorgungseinrichtungen durch Personal nur mit hohem Aufwand möglich ist, eingesetzt wird. Denkbar ist es z.B. auch, dass die Auswerteergebnisse der Auswerteeinheit als Eingaben für eine vollautomatische Steuerung oder Regelung von An- oder Ablegevorgängen der Stromabnehmer eingesetzt werden.

Weitere vorteilhafte Ausgestaltungen des erfindungsgemäßen Verfahrens ergeben sich aus den Unteransprüchen.

Günstig im Hinblick auf eine aufwandsarme Prüfung des Kriteriums ist es beispielsweise, wenn die das Kriterium ein Grenzwertkriterium ist.

Beispielsweise kann das Kriterium erfüllt sein und ein Stromabnehmer für einen Anlegevorgang an die Elektrizitätsversorgungseinrichtung freigegeben werden, wenn ein Absolutbetrag des Messwerts oder Absolutbeträge der Mehrzahl an Messwerten einen definierten Grenzwert überschreitet oder überschreiten etc.

Zweckmäßig kann es auch sein, wenn das Kriterium dann erfüllt ist, wenn der Messwert oder die Mehrzahl an Messwerten in einem definierten Wertebereich enthalten ist oder enthalten sind.

Beispielsweise kann für den Wertebereich ein unterer erster Grenzwert und ein oberer zweiter Grenzwert angesetzt werden. Beispielsweise kann das Kriterium erfüllt sein und der Stromabnehmer für einen Anlegevorgang an die Elektrizitätsversorgungseinrichtung freigegeben werden, wenn ein Absolutbetrag des Messwerts oder Absolutbeträge der Mehrzahl an Messwerten einen den ersten Grenzwert überschreitet oder überschreiten und wenn der Absolutbetrag oder die Absolutbeträge den zweiten Grenzwert unterschreiten. Dadurch kann z.B. vermieden werden, dass der Stromabnehmer bei ungewöhnlich oder unplausibel hohen Messwerten (z.B. aufgrund einer Störung der Elektrizitätsversorgungseinrichtung oder eines Messfehlers, der zu einer fehlerhaften Beurteilung der Anwesenheit der Elektrizitätsversorgungseinrichtung führt) an die Elektrizitätsversorgungseinrichtung angelegt wird.

Eine Vorzugslösung im Hinblick auf einen sicheren Stromabnehmerbetrieb erhält man, wenn mittels einer Steuereinheit oder Regeleinheit bei einer Erfüllung des Kriteriums eine Auslenkung eines Stromabnehmers des Fahrzeugs freigegeben wird.

Zur Freigabe des Stromabnehmers kann die Steuereinheit oder die Regeleinheit eingesetzt werden, wobei beispielsweise bei einem Einsatz der Regeleinheit im Gegensatz zu einem Einsatz der Steuereinheit eine Rückkoppelung eines Erfolgs eines Freigabevorgangs der Auslenkung durchgeführt werden kann.

Hilfreich im Zusammenhang mit einer Vermeidung von betrieblichen Risiken kann es auch sein, wenn mittels einer Steuereinheit oder Regeleinheit bei einer Verletzung des Kriteriums eine Auslenkung eines Stromabnehmers des Fahrzeugs verhindert wird.

Bei einer Verletzung des Kriteriums kann nicht von einer Anwesenheit der Elektrizitätsversorgungseinrichtung im Umfeld des Fahrzeugs ausgegangen werden.

Zum effektiven Umgang mit fehlerhaften oder unplausiblen Auswerteergebnissen der Auswerteeinheit oder für einen Wartungs- oder Abstellbetriebsmodus des Fahrzeugs kann es vorteilhaft sein, wenn mittels einer eine Steuereinheit oder Regeleinheit beeinflussenden, autorisierten Eingabe eine Verhinderung einer Auslenkung eines Stromabnehmers des Fahrzeugs unterdrückbar ist.

Dadurch wird eine Behelfslösung zur Freigabe der Auslenkung des Stromabnehmers trotz Verletzung des Kriteriums erzielt. So können z.B. Betriebsstörungen durch ungerechtfertigte Fahrtunterbrechungen etc. vermieden werden.

Beispielsweise kann die autorisierte Eingabe auf Basis einer visuellen Inspektion durch einen Triebfahrzeugführer oder durch eine kamerabasierte Überwachungseinrichtung etc. erfolgen.

Eine günstige Lösung wird erreicht, wenn mittels einer Ausgabeeinheit der Messwert oder die Mehrzahl an Messwerten ausgegeben wird.

Dadurch kann der Messerwert oder die Mehrzahl an Messwerten beispielsweise einem Triebfahrzeugführer optisch und/oder akustisch etc. indiziert werden.

Eine hilfreiche Indikation einer Stromabnehmerfreigabe bei Anwesenheit der Elektrizitätsversorgungseinrichtung im Umfeld des Fahrzeugs wird ermöglicht, wenn mittels einer Ausgabeeinheit bei einer Erfüllung des Kriteriums ein Freigabesignal ausgegeben wird, welches eine Freigabe einer Auslenkung eines Stromabnehmers des Fahrzeugs charakterisiert.

Günstig ist es auch, wenn mittels einer Ausgabeeinheit bei einer Verletzung des Kriteriums ein Sperrsignal ausgegeben wird, welches eine Verhinderung einer Auslenkung eines Stromabnehmers des Fahrzeugs charakterisiert.

Durch diese Maßnahme kann ein Zustand indiziert werden, in welchem aufgrund einer detektierten Abwesenheit der Elektrizitätsversorgungseinrichtung im Umfeld des Fahrzeugs eine Auslenkung des Stromabnehmers nicht möglich ist.

Eine aufwandsarme und kontaktlose Messung der Zustandsgröße des Magnetfelds oder des elektrischen Felds wird ermöglicht, wenn mittels der Detektionseinheit als Zustandsgröße des Magnetfelds oder des elektrischen Felds eine in die Detektionseinheit induzierte, elektrische Induktionsspannung gemessen wird.

Die Detektionseinheit kann zur Messung der Zustandsgröße beispielsweise als Induktionsspule ausgebildet sein oder eine Induktionsspule umfassen.

Günstig ist es auch, wenn die elektrische Spannung der Elektrizitätsversorgungseinrichtung eine Betriebsspannung zum Antreiben von Fahrzeugen ist.

Durch diese Maßnahme kann auf separat in die Elektrizitätsversorgungseinrichtung einzuspeisende Prüfsignale, welche zur Anwesenheitserkennung der Elektrizitätsversorgungseinrichtung gemessen werden, verzichtet werden.

Die Betriebsspannung ist jene elektrische Spannung, die für einen Fahrbetrieb der Fahrzeuge erforderlich ist, und kann beispielsweise eine Wechselspannung sein.

Risiken durch unzulässiges oder unbeabsichtigtes Auslenken von Stromabnehmern werden mit einer Vorrichtung zur Anwesenheitserkennung von infrastrukturseitigen Elektrizitätsversorgungseinrichtungen reduziert, wobei die Elektrizitätsversorgungseinrichtungen zur Versorgung von Fahrzeugen, insbesondere von Schienenfahrzeugen, über Stromabnehmer der Fahrzeuge geeignet sind, wobei die Vorrichtung dazu ausgebildet ist, ein erfindungsgemäßes Verfahren durchzuführen, wobei die Vorrichtung eine Detektionseinheit sowie eine mit der Detektionseinheit verbundene Auswerteeinheit aufweist, wobei die Detektionseinheit dazu ausgebildet ist, eine Zustandsgröße eines Magnetfelds oder eines elektrischen Felds, welches aufgrund einer elektrischen Spannung einer Elektrizitätsversorgungseinrichtung, welche zur Stromversorgung eines Fahrzeugs eingerichtet ist, zwischen der Elektrizitätsversorgungseinrichtung und dem Fahrzeug wirkt, zu messen, und wobei die Auswerteeinheit dazu ausgebildet ist, eine Anwesenheit der Elektrizitätsversorgungseinrichtung dann als erkannt zu beurteilen, wenn ein Messwert der gemessenen Zustandsgröße oder eine Mehrzahl an Messwerten der gemessenen Zustandsgröße ein definiertes Kriterium erfüllt oder erfüllen.

Im Zusammenhang mit einer Reaktion auf Auswerteergebnisse der Auswerteeinheit ist es günstig, wenn die Vorrichtung eine mit der Auswerteeinheit verbundene Steuereinheit oder Regeleinheit zur Steuerung oder Regelung eines Stromabnehmers des Fahrzeugs auf Grundlage von Auswerteergebnissen der Auswerteeinheit aufweist.

Im Hinblick auf eine Indikation von Auswerteergebnissen der Auswerteeinheit ist es hilfreich, wenn die Vorrichtung eine mit der Auswerteeinheit verbundene Ausgabeeinheit zur Ausgabe von Auswerteergebnissen der Auswerteeinheit aufweist.

Ein erfolgversprechendes Anwendungsgebiet für eine Anwesenheitserkennung von Elektrizitätsversorgungseinrichtungen wird mit einem Fahrzeug mit zumindest einer erfindungsgemäßen Vorrichtung erschlossen.

Nachfolgend wird die Erfindung anhand von Ausführungsbeispielen näher erläutert.

Es zeigen beispielhaft:
- Fig. 1:: Ein Flussdiagramm zu einer beispielhaften Ausführungsvariante eines erfindungsgemäßen Verfahrens zur Anwesenheitserkennung von Elektrizitätsversorgungseinrichtungen,
- Fig. 2:: Einen schematischen Seitenriss einer beispielhaften Ausführungsvariante eines erfindungsgemäßen Fahrzeugs mit einer beispielhaften Ausführungsvariante einer erfindungsgemäßen Vorrichtung zur Anwesenheitserkennung von Elektrizitätsversorgungseinrichtungen,
- Fig. 3:: Ein beispielhaftes erstes Diagramm, in welchem ein zeitlicher Verlauf einer elektrischen Oberleitungsspannung bei einem Absenken eines Dachstromabnehmers eines Schienenfahrzeugs dargestellt ist, und
- Fig. 4:: Ein beispielhaftes zweites Diagramm, in welchem ein zeitlicher Verlauf einer elektrischen Induktionsspannung, welche in eine Detektionseinheit einer erfindungsgemäßen Vorrichtung zur Anwesenheitserkennung von Elektrizitätsversorgungseinrichtungen induziert wird, dargestellt ist.

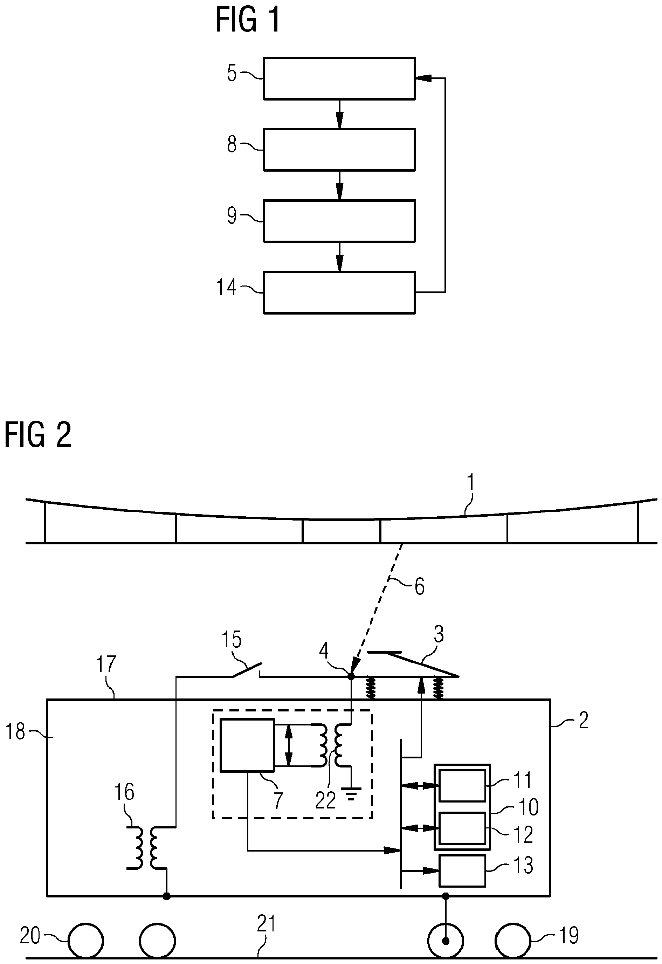

Fig. 1 zeigt ein Flussdiagramm zu einer beispielhaften Ausführungsvariante eines erfindungsgemäßen Verfahrens zur Anwesenheitserkennung einer infrastrukturseitigen Elektrizitätsversorgungseinrichtung 1 zur Versorgung eines als Schienenfahrzeug ausgebildeten Fahrzeugs 2, wie es beispielhaft in Fig. 2 dargestellt ist, mit elektrischer Energie. Die Elektrizitätsversorgungseinrichtung 1, welche ebenfalls in Fig. 2 gezeigt ist, ist als Oberleitung ausgebildet, an welche ein Stromabnehmer 3 des Fahrzeugs 2 zur Stromabnahme und zur Versorgung von Antrieben sowie einer Bordausrüstung des Fahrzeugs 2 angelegt werden kann. Bei an die Oberleitung angelegtem Stromabnehmer 3 kann Strom von der Oberleitung über den Stromabnehmer 3 in elektrische Einrichtungen des Fahrzeugs 2 fließen.

Mittels einer Detektionseinheit 4 des Fahrzeugs 2 wird in einem Messschritt 5 des Verfahrens eine Zustandsgröße eines Magnetfelds 6, welches aufgrund einer elektrischen Spannung der Elektrizitätsversorgungseinrichtung 1 zwischen der Elektrizitätsversorgungseinrichtung 1 und dem Fahrzeug 2 wirkt, gemessen.

Die elektrische Spannung der Elektrizitätsversorgungseinrichtung 1 ist eine Betriebswechselspannung zum Antreiben des Fahrzeugs 2.

Erfindungsgemäß ist es möglich, dass anstatt des Magnetfelds 6 ein elektrisches Feld gemessen wird und eine Anwesenheitserkennung auf Basis von Messungen des elektrischen Felds vorgenommen wird.

Die Detektionseinheit 4 weist eine Induktionsspule auf, in welche eine elektrische Induktionsspannung induziert wird. Diese Induktionsspannung wird ausgewertet und charakterisiert das bei Anwesenheit der Elektrizitätsversorgungseinrichtung 1 wirkende Magnetfeld 6.

Die gemessene Zustandsgröße des Magnetfelds 6 ist demnach die Induktionsspannung.

Mittels der Induktionsspule kann erfindungsgemäß auch eine Induktionsspannung aus einem elektrischen Feld gemessen werden.

Mittels einer Auswerteeinheit 7 wird in einem Auswerteschritt 8 auf Basis des Messschritts 5 eine Anwesenheit der Elektrizitätsversorgungseinrichtung 1 dann als erkannt beurteilt, wenn ein Messwert der Induktionsspannung oder eine Mehrzahl an Messwerten der Induktionsspannung ein definiertes Kriterium erfüllt oder erfüllen.

Das definierte Kriterium ist ein Grenzwertkriterium. In dem Auswerteschritt 8 wird die gemessene Induktionsspannung mit einem Induktionsspannungsgrenzwert verglichen. Ist ein Absolutbetrag der Induktionsspannung gleich dem oder größer als der Induktionsspannungsgrenzwert, so gilt eine Anwesenheit der Elektrizitätsversorgungseinrichtung 1 im Umfeld des Fahrzeugs 2 als erkannt. Ist hingegen der Absolutbetrag der Induktionsspannung kleiner als der Induktionsspannungsgrenzwert, so wird von einer Abwesenheit der Elektrizitätsversorgungseinrichtung 1 ausgegangen, d.h. es wird eine Beurteilung dahingehend vorgenommen, dass oberhalb des Fahrzeugs 2 keine Oberleitung angeordnet ist und daher der Stromabnehmer 3 nicht angehoben werden kann.

Erfindungsgemäß ist es auch vorstellbar, dass das Kriterium dann erfüllt ist, wenn der Messwert oder die Mehrzahl an Messwerten bezüglich der Induktionsspannung in einem definierten Wertebereich, z.B. gebildet durch einen unteren, ersten Grenzwert und einen oberen, zweiten Grenzwert, enthalten ist oder enthalten sind.

Ist das Kriterium erfüllt, d.h. ist der Absolutbetrag der Induktionsspannung gleich dem oder größer als der Induktionsspannungsgrenzwert, so wird in einem Steuerschritt 9 mittels einer Steuereinheit 10 des Fahrzeugs 2 eine Auslenkung des Stromabnehmers 3 freigegeben. Der Stromabnehmer 3 kann nun z.B. durch einen Triebfahrzeugführer mittels eines Stellelements 11 der Steuereinheit 10 oder automatisch mittels eines Steuerrechners 12 angehoben und an die Elektrizitätsversorgungseinrichtung 1 angelegt werden. Mittels einer als Führerraumanzeige ausgeführten Ausgabeeinheit 13 des Fahrzeugs 2 wird in einem Ausgabeschritt 14 die gemessene Induktionsspannung dem Triebfahrzeugführer angezeigt.

Zusätzlich wird in dem Ausgabeschritt 14 mittels der Ausgabeeinheit 13 bei Erfüllung des Kriteriums ein optisches Freigabesignal ausgegeben, welches eine Freigabe der Auslenkung des Stromabnehmers 3 charakterisiert und den Triebfahrzeugführer darüber informiert, dass er einen Anhebevorgang des Stromabnehmers 3 einleiten kann.

Ist das Kriterium hingegen verletzt, d.h. ist der Absolutbetrag der Induktionsspannung kleiner als der Induktionsspannungsgrenzwert, so wird mittels der Steuereinheit 10 die Auslenkung des Stromabnehmers 3 verhindert. Die Auswerteeinheit 7 übermittelt hierzu der Steuereinheit 10 ein entsprechendes Signal, welches eine Bedienung des Stellelements 11 sperrt und/oder den Steuerrechner 12 anweist, eine Instruktion zum Anheben des Stromabnehmers 3 nicht umzusetzen.

Mittels der Ausgabeeinheit 13 wird in dem Ausgabeschritt 14 bei Verletzung des Kriteriums ein Sperrsignal ausgegeben, welches eine Verhinderung einer Auslenkung eines Stromabnehmers 3 des Fahrzeugs 2 charakterisiert und dem Triebfahrzeugführer als grafisches Symbol auf der Führerraumanzeige dargestellt wird.

Ist das Kriterium zwar verletzt, wird aber die Elektrizitätsversorgungseinrichtung 1 visuell (z.B. durch den Triebfahrzeugführer oder eine kamerabasierte Überwachungseinrichtung) über dem Fahrzeug 2 detektiert, so kann von einer fehlerhaften Auswertung durch die Auswerteeinheit 7 ausgegangen werden und es kann in dem Steuerschritt 9 mittels einer die Steuereinheit 10 beeinflussenden, autorisierten Eingabe die Auslenkung des Stromabnehmers 3 trotz Verletzung des Kriteriums freigegeben werden (eine Verhinderung der Auslenkung des Stromabnehmers 3 wird also unterdrückt). Diese Eingabe kann beispielsweise durch den Triebfahrzeugführer an dem Steuerrechner 12 vorgenommen werden. Die autorisierte Eingabe kann beispielsweise auch dann vorgenommen werden, wenn der Stromabnehmer 3 aus Wartungsgründen ohne im Umfeld des Fahrzeugs 2 angeordnete Elektrizitätsversorgungseinrichtung 1 ausgelenkt werden muss etc.

Erfindungsgemäß ist es auch vorstellbar, dass die Auswerteeinheit 7 und die Steuereinheit 10 zu einem Gerät, welches Auswertefunktionen und Steuerungsfunktionen übernimmt, zusammengefasst sind. Hierbei ist es möglich, dass der Detektionseinheit 4 und einem derartig kombinierten Auswerte-Steuergerät eine Vorauswerteeinheit zwischengeschaltet ist, welche Messignale der Detektionseinheit 4 verarbeitet und an das Auswerte-Steuergerät weiterleitet.

Anstelle der Steuereinheit 10 kann erfindungsgemäß auch eine Regeleinheit eingesetzt sein, welche eine Rückkoppelung von Steuerungsvorgängen ermöglicht.

In Fig. 2 sind eine beispielhafte Ausführungsvariante einer erfindungsgemäßen Vorrichtung zur Anwesenheitserkennung von infrastrukturseitigen Elektrizitätsversorgungseinrichtungen für Fahrzeuge, eine als Oberleitung ausgebildete Elektrizitätsversorgungseinrichtung 1 sowie eine als Schienenfahrzeug ausgebildete, beispielhafte Ausführungsvariante eines erfindungsgemäßen Fahrzeugs 2 dargestellt.

Mittels der Vorrichtung wird ein Verfahren durchgeführt, wie es beispielhaft im Zusammenhang mit Fig. 1 beschrieben ist. Das Fahrzeug 2 weist einen als Dachpantographen ausgebildeten Stromabnehmer 3 auf, welcher in jenem in Fig. 2 gezeigten Zustand nicht an die Elektrizitätsversorgungseinrichtung 1 angelegt ist und in einem an die Elektrizitätsversorgungseinrichtung 1 angelegten Zustand das Fahrzeug 2 aus der Elektrizitätsversorgungseinrichtung 1 mit elektrischer Energie versorgen kann.

Mit einem Grundrahmen des Stromabnehmers 3 ist eine Detektionseinheit 4, umfassend eine Induktionsspule, verbunden, über welche eine Induktionsspannung in die Induktionsspule als Zustandsgröße eines Magnetfelds 6 zwischen der Elektrizitätsversorgungseinrichtung 1 und dem Fahrzeug 2 gemessen wird. Erfindungsgemäß ist es möglich, dass anstatt des Magnetfelds 6 ein elektrisches Feld gemessen wird und eine Anwesenheitserkennung auf Basis von Messungen des elektrischen Felds vorgenommen wird.

Der Stromabnehmer 3 ist über einen Hauptschalter 15 mit einem Haupttransformator 16 des Fahrzeugs 2 elektrisch verbunden. Die Detektionseinheit 4 ist mit einer Auswerteeinheit 7 der Vorrichtung elektrisch verbunden.

Der Stromabnehmer 3, die Detektionseinheit 4 sowie der Hauptschalter 15 sind auf einem Dach 17 des Fahrzeugs 2 angeordnet.

Die Auswerteeinheit 7 und der Haupttransformator 16 sind in einem Wagenkasten 18 des Fahrzeugs 2 angeordnet. Der Wagenkasten 18 ist über ein erstes Fahrwerk 19 und ein zweites Fahrwerk 20 auf einem Gleis 21 angeordnet.

Von der Detektionseinheit 4 werden Induktionsspannungssignale über elektrische Verbindungsmittel und einen Transformator 22 an die Auswerteeinheit 7 geleitet und darin ausgewertet. Die Auswerteeinheit 7 ist dazu ausgebildet, eine Anwesenheit der Elektrizitätsversorgungseinrichtung 1, wie im Zusammenhang mit Fig. 1 beschrieben, dann als erkannt zu beurteilen, wenn ein Messwert der gemessenen Zustandsgröße oder eine Mehrzahl an Messwerten der gemessenen Zustandsgröße ein definiertes Kriterium erfüllt oder erfüllen.

Mit der Auswerteeinheit 7 sind eine Steuereinheit 10 der Vorrichtung zur Betätigung des Stromabnehmers 3 sowie eine als Führerraumanzeige ausgebildete Ausgabeeinheit 13 der Vorrichtung signalübertragend verbunden.

Mittels der Steuereinheit 10 wird, wie auch im Zusammenhang mit Fig. 1 beispielhaft beschrieben, der Stromabnehmer 3 auf Grundlage von Auswerteergebnissen der Auswerteeinheit 7 gesteuert.

Die Steuereinheit 10 weist ein Stellelement 11 sowie einen Steuerrechner 12 auf und ist signalübertragend mit einem nicht gezeigten Hebeantrieb des Stromabnehmers 3 verbunden. Über die Steuereinheit 10 kann der Stromabnehmer 3 veranlasst werden, Hebe- oder Senkvorgänge durchzuführen, oder es können Hebevorgänge des Stromabnehmers 3 verhindert werden. Kommandos für diese Hebe- oder Senkvorgänge können hierbei von einem Triebfahrzeugführer über das Stellelement 11 generiert werden oder über den Steuerrechner 12 automatisch erzeugt werden.

Das erfindungsgemäße Fahrzeug 2 kann als automatisch oder autonom betriebenes Fahrzeug ausgeführt sein, wobei auf das Stellelement 11 verzichtet werden kann und die Kommandos für die Hebe- oder Senkvorgänge ausschließlich von dem Steuerrechner 12 gebildet werden können.

Mittels der Ausgabeeinheit 13 werden dem Triebfahrzeugführer, wie auch im Zusammenhang mit Fig. 1 beispielhaft beschrieben, Auswerteergebnisse der Auswerteeinheit 7 angezeigt.

Ist das Fahrzeug 2 als automatisch oder autonom betriebenes Fahrzeug ausgeführt, so kann auf die Ausgabeeinheit 13 verzichtet werden.

Das Fahrzeug 2 kann als Lokomotive, als Triebzug oder aber auch als Elektrobus etc. ausgebildet sein. Es ist möglich, dass der Stromabnehmer 3 und die Detektionseinheit 4 mit einem ersten Wagen eines ersten Fahrzeugs verbunden sind, und dass die Auswerteeinheit 7, die Steuereinheit 10 und die Ausgabeeinheit 13 mit einem anderen, zweiten Wagen des ersten Fahrzeugs oder mit einem über das erste Fahrzeug gesteuerten zweiten Fahrzeug verbunden sind etc.

Die Auswerteeinheit 7, die Steuereinheit 10 und die Ausgabeeinheit 13 sind über eine nicht dargestellte Batterie des Fahrzeugs 2 mit Elektrizität versorgt.

Erfindungsgemäß ist es auch denkbar, dass die Auswerteeinheit 7 und die Steuereinheit 10 zu einem Gerät, welches Auswertefunktionen und Steuerungsfunktionen übernimmt, zusammengefasst sind. Hierbei ist es möglich, dass der Detektionseinheit 4 und einem derartig kombinierten Auswerte-Steuergerät eine Vorauswerteeinheit zwischengeschaltet ist, welche Messignale der Detektionseinheit 4 verarbeitet und an das Auswerte-Steuergerät weiterleitet.

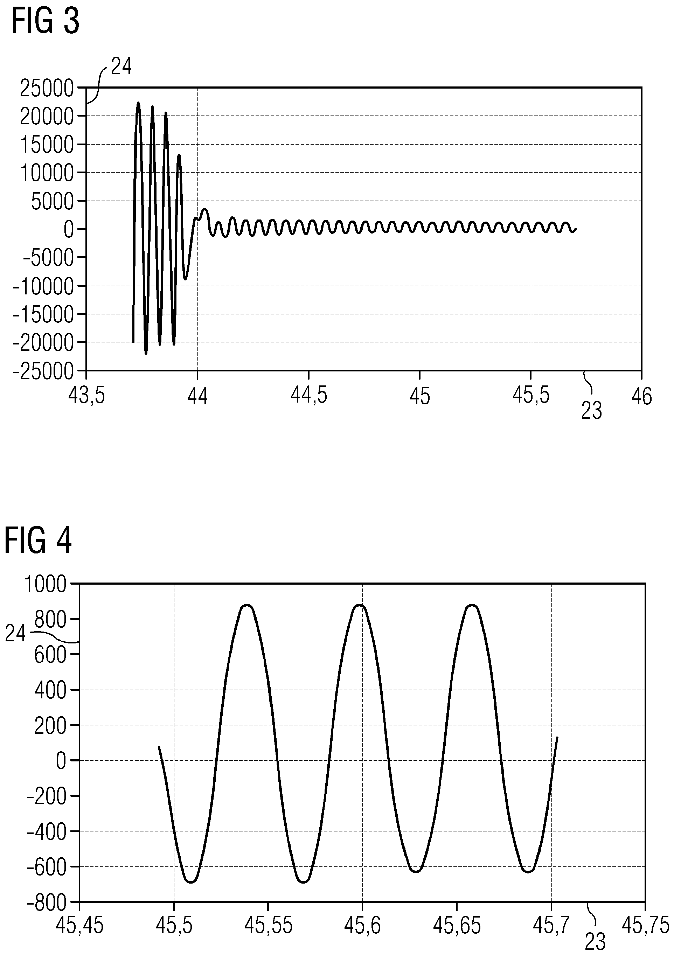

Fig. 3 zeigt ein beispielhaftes erstes Diagramm, in welchem ein zeitlicher Verlauf einer elektrischen Wechselspannung einer als Oberleitung ausgebildeten Elektrizitätsversorgungseinrichtung bei einem Absenken eines Dachstromabnehmers eines Schienenfahrzeugs dargestellt ist. Auf einer Zeitachse 23 ist eine Zeit in Sekunden aufgetragen, auf einer Spannungsachse 24 die Wechselspannung in Volt.

Die Wechselspannung erreicht zunächst Werte von größer als 20000 V, sinkt jedoch nach ca. 44 s stark ab.

In Fig. 4 ist ein beispielhaftes zweites Diagramm, in welchem ein zeitlicher Verlauf einer elektrischen Induktionsspannung, welche in eine Detektionseinheit 4 einer erfindungsgemäßen Vorrichtung zur Anwesenheitserkennung von Elektrizitätsversorgungseinrichtungen, wie sie beispielhaft in Fig. 2 gezeigt ist, induziert wird, dargestellt ist, offenbart.

Auf einer Zeitachse 23 ist eine Zeit in Sekunden aufgetragen, auf einer Spannungsachse 24 die Induktionsspannung in Volt. Bei der in Fig. 4 gezeigten Induktionsspannung handelt es sich um eine Wechsel-Nennspannung, welche ein Spannungsmaximum von ca. 800 V aufweist.

### Liste der Bezeichnungen

- 1: Elektrizitätsversorgungseinrichtung
- 2: Fahrzeug
- 3: Stromabnehmer
- 4: Detektionseinheit
- 5: Messschritt
- 6: Magnetfeld
- 7: Auswerteeinheit
- 8: Auswerteschritt
- 9: Steuerschritt
- 10: Steuereinheit
- 11: Stellelement
- 12: Steuerrechner
- 13: Ausgabeeinheit
- 14: Ausgabeschritt
- 15: Hauptschalter
- 16: Haupttransformator
- 17: Dach
- 18: Wagenkasten
- 19: Erstes Fahrwerk
- 20: Zweites Fahrwerk
- 21: Gleis
- 22: Transformator
- 23: Zeitachse
- 24: Spannungsachse

## Patentansprüche

1. Verfahren zur Anwesenheitserkennung von infrastrukturseitigen Elektrizitätsversorgungseinrichtungen, wobei die Elektrizitätsversorgungseinrichtungen zur Versorgung von Fahrzeugen, insbesondere von Schienenfahrzeugen, über Stromabnehmer der Fahrzeuge geeignet sind, **dadurch gekennzeichnet, dass** mittels einer Detektionseinheit (4) eine Zustandsgröße eines Magnetfelds (6) oder eines elektrischen Felds, welches aufgrund einer elektrischen Spannung einer Elektrizitätsversorgungseinrichtung (1), welche zur Stromversorgung eines Fahrzeugs (2) eingerichtet ist, zwischen der Elektrizitätsversorgungseinrichtung (1) und dem Fahrzeug (2) wirkt, gemessen wird, und mittels einer Auswerteeinheit (7) eine Anwesenheit der Elektrizitätsversorgungseinrichtung (1) dann als erkannt beurteilt wird, wenn ein Messwert der gemessenen Zustandsgröße oder eine Mehrzahl an Messwerten der gemessenen Zustandsgröße ein definiertes Kriterium erfüllt oder erfüllen.

2. Verfahren nach Anspruch 1, **dadurch gekennzeichnet, dass** das Kriterium ein Grenzwertkriterium ist.

3. Verfahren nach Anspruch 1 oder 2, **dadurch gekennzeichnet, dass** das Kriterium dann erfüllt ist, wenn der Messwert oder die Mehrzahl an Messwerten in einem definierten Wertebereich enthalten ist oder enthalten sind.

4. Verfahren nach einem der Ansprüche 1 bis 3, **dadurch gekennzeichnet, dass** mittels einer Steuereinheit (10) oder Regeleinheit bei einer Erfüllung des Kriteriums eine Auslenkung eines Stromabnehmers (3) des Fahrzeugs (2) freigegeben wird.

5. Verfahren nach einem der Ansprüche 1 bis 4, **dadurch gekennzeichnet, dass** mittels einer Steuereinheit (10) oder Regeleinheit bei einer Verletzung des Kriteriums eine Auslenkung eines Stromabnehmers (3) des Fahrzeugs (2) verhindert wird.

6. Verfahren nach einem der Ansprüche 1 bis 4, **dadurch gekennzeichnet, dass** mittels einer eine Steuereinheit (10) oder Regeleinheit beeinflussenden, autorisierten Eingabe eine Verhinderung einer Auslenkung eines Stromabnehmers (3) des Fahrzeugs (2) unterdrückbar ist.

7. Verfahren nach einem der Ansprüche 1 bis 6, **dadurch gekennzeichnet, dass** mittels einer Ausgabeeinheit (13) der Messwert oder die Mehrzahl an Messwerten ausgegeben wird.

8. Verfahren nach einem der Ansprüche 1 bis 7, **dadurch gekennzeichnet, dass** mittels einer Ausgabeeinheit (13) bei einer Erfüllung des Kriteriums ein Freigabesignal ausgegeben wird, welches eine Freigabe einer Auslenkung eines Stromabnehmers (3) des Fahrzeugs (2) charakterisiert.

9. Verfahren nach einem der Ansprüche 1 bis 8, **dadurch gekennzeichnet, dass** mittels einer Ausgabeeinheit (13) bei einer Verletzung des Kriteriums ein Sperrsignal ausgegeben wird, welches eine Verhinderung einer Auslenkung eines Stromabnehmers (3) des Fahrzeugs (2) charakterisiert.

10. Verfahren nach einem der Ansprüche 1 bis 9, **dadurch gekennzeichnet, dass** mittels der Detektionseinheit (4) als Zustandsgröße des Magnetfelds (6) oder des elektrischen Felds eine in die Detektionseinheit (4) induzierte, elektrische Induktionsspannung gemessen wird.

11. Verfahren nach einem der Ansprüche 1 bis 10, **dadurch gekennzeichnet, dass** die elektrische Spannung der Elektrizitätsversorgungseinrichtung (1) eine Betriebsspannung zum Antreiben von Fahrzeugen ist.

12. Vorrichtung zur Anwesenheitserkennung von infrastrukturseitigen Elektrizitätsversorgungseinrichtungen, wobei die Elektrizitätsversorgungseinrichtungen zur Versorgung von Fahrzeugen, insbesondere von Schienenfahrzeugen, über Stromabnehmer der Fahrzeuge geeignet sind, wobei die Vorrichtung dazu ausgebildet ist, ein Verfahren nach einem der Ansprüche 1 bis 11 durchzuführen, **dadurch gekennzeichnet, dass** die Vorrichtung eine Detektionseinheit (4) sowie eine mit der Detektionseinheit (4) verbundene Auswerteeinheit (7) aufweist, wobei die Detektionseinheit (4) dazu ausgebildet ist, eine Zustandsgröße eines Magnetfelds (6) oder eines elektrischen Felds, welches aufgrund einer elektrischen Spannung einer Elektrizitätsversorgungseinrichtung (1), welche zur Stromversorgung eines Fahrzeugs (2) eingerichtet ist, zwischen der Elektrizitätsversorgungseinrichtung (1) und dem Fahrzeug (2) wirkt, zu messen, und wobei die Auswerteeinheit (7) dazu ausgebildet ist, eine Anwesenheit der Elektrizitätsversorgungseinrichtung (1) dann als erkannt zu beurteilen, wenn ein Messwert der gemessenen Zustandsgröße oder eine Mehrzahl an Messwerten der gemessenen Zustandsgröße ein definiertes Kriterium erfüllt oder erfüllen.

13. Vorrichtung nach Anspruch 12, **dadurch gekennzeichnet, dass** die Vorrichtung eine mit der Auswerteeinheit (7) verbundene Steuereinheit (10) oder Regeleinheit zur Steuerung oder Regelung eines Stromabnehmers (3) des Fahrzeugs (2) auf Grundlage von Auswerteergebnissen der Auswerteeinheit (7) aufweist.

14. Vorrichtung nach Anspruch 12 oder 13, **dadurch gekennzeichnet, dass** die Vorrichtung eine mit der Auswerteeinheit (7) verbundene Ausgabeeinheit (13) zur Ausgabe von Auswerteergebnissen der Auswerteeinheit (7) aufweist.

15. Fahrzeug (2) mit zumindest einer Vorrichtung nach einem der Ansprüche 12 bis 14.
